(19) Europäisches Patentamt
European Patent Office
Office européen des brevets

(11) EP 4 345 928 A2

(12) EUROPEAN PATENT APPLICATION

(43) Date of publication:
03.04.2024 Bulletin 2024/14

(21) Application number: 23184636.1

(22) Date of filing: 11.07.2023

(51) International Patent Classification (IPC):
$H01M\ 4/02$ (2006.01)  $H01M\ 4/04$ (2006.01)
$H01M\ 4/133$ (2010.01)  $H01M\ 4/134$ (2010.01)
$H01M\ 4/1393$ (2010.01)  $H01M\ 4/36$ (2006.01)
$H01M\ 4/38$ (2006.01)  $H01M\ 4/62$ (2006.01)

(52) Cooperative Patent Classification (CPC):
H01M 4/134; H01M 4/0404; H01M 4/133;
H01M 4/1393; H01M 4/364; H01M 4/366;
H01M 4/386; H01M 4/622; H01M 4/625;
H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 KR 20220122892
29.03.2023 KR 20230041335

(71) Applicants:
• SK On Co., Ltd.
Seoul 03161 (KR)

• SK Innovation Co., Ltd.
Seoul 03188 (KR)

(72) Inventors:
• LEE, Yong Hee
34124 Daejeon (KR)
• LEE, Ji Sun
34124 Daejeon (KR)

(74) Representative: Bird & Bird LLP
Maximiliansplatz 22
80333 München (DE)

(54) ANODE FOR SECONDARY BATTERY AND SECONDARY BATTERY COMPRISING THE SAME

(57) An anode for a secondary battery and a secondary battery including the anode are disclosed. In an embodiment, the anode including an anode current collector; and an anode mixture layer formed on at least one surface of the anode current collector and including an anode active material and a binder, wherein the anode mixture layer includes a first zone on the anode current collector and a second zone on the first zone, a sum of thicknesses of the first zone and the second zone is 3/4 or less of a total thickness of the anode mixture layer, and the first zone and the second zone satisfy, according to energy dispersive X-ray spectroscopy, Formula 1 below:

[Formula 1]

$$1/7 \leq I_{zone2}/I_{zone1} \leq 2/3$$

wherein $I_{zone1}$ refers to a peak intensity corresponding to the binder included in the first zone, and $I_{zone2}$ refers to a peak intensity corresponding to the binder included in the second zone.

FIG. 1

**Description**

**TECHNICAL FIELD**

The technology and implementations disclosed in this patent document generally relate to an anode for a secondary battery and a secondary battery including the anode.

**BACKGROUND**

With the development of electronics and communication technologies and space technologies, the demand for secondary batteries such as lithium secondary batteries is rapidly increasing. With the reinforced global eco-friendly policies, the electric vehicle market is growing by leaps and bounds, and research and development on lithium secondary batteries is being actively carried out.

**SUMMARY**

The disclosed technology can be implemented in some embodiments to provide an anode with a minimized deformation and a secondary battery with an improved energy density and capacity retention ratio.
In an aspect of the disclosed technology, there is provided an anode for a secondary battery, including an anode current collector; and an anode mixture layer formed on at least one surface of the anode current collector and including an anode active material and a binder, wherein the anode mixture layer includes a first zone (located) on the anode current collector and a second zone (located) on the first zone, a sum of thicknesses of the first zone and the second zone is 3/4 or less of a total thickness of the anode mixture layer, and the first zone and the second zone satisfy, according to energy dispersive X-ray spectroscopy, Formula 1 below:

$$[\text{Formula 1}]$$
$$1/7 \leq I_{zone2}/I_{zone1} \leq 2/3$$

wherein $I_{zone1}$ refers to a peak intensity corresponding to the binder included in the first zone, and $I_{zone2}$ refers to a peak intensity corresponding to the binder included in the second zone.
For example, the anode mixture layer formed on at least one surface of the anode current collector and including an anode active material and a binder, wherein the anode mixture layer includes a first layer (located) on the anode current collector and a second layer (located) on the first zone, a sum of thicknesses of the first layer and the second layer is 3/4 or less of a total thickness of the anode mixture layer, and the first layer and the second layer satisfy, according to energy dispersive X-ray spectroscopy, Formula 1 above.
Preferably, the terms "zone" and "layer" can be used interchangeably.
In an embodiment of the disclosed technology, the binder may include butadiene-based binder.
In an embodiment of the disclosed technology, the butadiene-based binder may include styrene butadiene rubber.
In an embodiment of the disclosed technology, the anode active material may include a silicon-based material.
In an embodiment of the disclosed technology, the first zone and the second zone may satisfy, according to energy dispersive X-ray spectroscopy, Formula 2 below:

$$[\text{Formula 2}]$$
$$1/12 \leq (I_{zone2}/I_{Si2})/(I_{zone1}/I_{Si1}) \leq 2/3$$

wherein $I_{zone1}$ refers to the peak intensity corresponding to the binder included in the first zone, $I_{zone2}$ refers to the peak intensity corresponding to the binder included in the second zone, $I_{Si1}$ refers to a peak intensity corresponding to the silicon-based material included in the first zone, and $I_{Si2}$ refers to a peak intensity corresponding to the silicon-based material included in the second zone.
In another aspect of the disclosed technology, there is provided an anode for a secondary battery, including an anode current collector; and an anode mixture layer formed on at least one surface of the anode current collector and including an anode active material and a binder, wherein the anode mixture layer includes a first zone on the anode current collector and a second zone on the first zone, a sum of thicknesses of the first zone and the second zone is 3/4 or less of a total thickness of the anode mixture layer, and a content ratio of the binder included in the first zone and the second zone, respectively, ranges from 1.5:1 to 7.0:1.

In an embodiment of the disclosed technology, the thickness of the first zone may range from 1/20 to 2/5 of the total thickness of the anode mixture layer.

In an embodiment of the disclosed technology, the thickness of the second zone may range from 1/20 to 13/20 of the total thickness of the anode mixture layer.

In an embodiment of the disclosed technology, the sum of the thicknesses of the first zone and the second zone may range from 2/5 to 3/5 of the total thickness of the anode mixture layer.

In an embodiment of the disclosed technology, the anode mixture layer may further include a third zone on the second zone.

In an embodiment of the disclosed technology, the sum of the thicknesses of the first zone and the second zone may be equal to a thickness of the third zone.

In an embodiment of the disclosed technology, the thickness of the first zone may be identical to the thickness of the second zone.

In an embodiment of the disclosed technology, the binder may include styrene butadiene rubber.

In an embodiment of the disclosed technology, the binder may be included in an amount of 0.05 wt% to 5.0 wt% based on a total solid weight of the anode mixture layer.

In an embodiment of the disclosed technology, the anode active material may include a silicon-based material.

In an embodiment of the disclosed technology, the silicon-based material may include one or more selected from a group consisting of $SiO_x$ ($0 \leq x < 2$), Si/C composites, and Si alloys.

In an embodiment of the disclosed technology, in the anode for a secondary battery, $(X_{B1}/X_{Si1}):(X_{B2}/X_{Si2})$ may satisfy 1.5:1 to 12:1.

Here, $X_{B1}$ refers to a content of the binder included in the first zone, $X_{B2}$ refers to a content of the binder included in the second zone, $X_{Si1}$ refers to a silicon content included in the first zone, and $X_{Si2}$ refers to a silicon content included in the second zone.

In an embodiment of the disclosed technology, the anode active material may be included in an amount of 1 wt% to 20 wt% based on a total solid weight of the anode mixture layer.

In an embodiment of the disclosed technology, the anode mixture layer may further include a carbon-based material.

In an embodiment of the disclosed technology, a loading amount of the anode mixture layer may range from 4 mg/cm$^2$ to 20 mg/cm$^2$.

In another aspect of the disclosed technology, there is provided a secondary battery including the anode, a cathode and a separator interposed between the anode and the cathode.

An anode and a secondary battery including the same based on some embodiments of the disclosed technology have a high binder content in an zone close to the anode current collector, thereby improving adhesion at the interface between the anode current collector and the anode mixture layer, and there is an effect of improving the capacity retention ratio of the secondary battery.

In addition, the anode and the secondary battery including the same based on some embodiments of the disclosed technology have an effect of improving the energy density of the secondary battery.

In addition, the anode and the secondary battery including the same based on some embodiments of the disclosed technology limit the content ratio of the binder in a specific zone in the anode mixture layer formed on the anode current collector, thereby having an effect of minimizing deformation of the anode while improving the capacity retention ratio of the secondary battery.

## BRIEF DESCRIPTION OF THE DRAWINGS

Example embodiments will now be described with reference to the accompanying drawings; however, they may be embodied in different forms and should not be construed as limited to the embodiments set forth herein.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.

FIG. 1 shows an example structure of an anode based on an embodiment of the disclosed technology.

FIG. 2 is an image that shows a distribution of a binder in an anode based on an embodiment of the disclosed technology.

FIG. 3 is a graph illustrating a difference in lifespan characteristics between an example of an anode implemented based on some embodiments and a comparative example of an anode.

## DETAILED DESCRIPTION

In some implementations, a secondary battery such as a lithium secondary battery includes a cathode, an anode, a separator interposed between the cathode and anode and provide a physical barrier therebetween, an electrolyte material interposed between the cathode an anode to have a sufficient ionic conductivity allowing movement of lithium ions, and an active material capable of inserting and extracting lithium ions is provided on the cathode and the anode, respectively.

Natural graphite and artificial graphite may be used for an anode of a lithium secondary battery, but the graphite has a low energy density. The disclosed technology can be implemented in some embodiments to provide a new anode material with an improved energy density.

The disclosed technology can be implemented in some embodiments to provide an anode and a secondary battery including the anode, as will be discussed below.

Anode

An anode for a secondary battery implemented based on some embodiments of the disclosed technology includes an anode current collector; and an anode mixture layer formed on at least one surface of the anode current collector and including an anode active material and a binder, wherein the anode mixture layer includes a first zone on the anode current collector and a second zone on the first zone, a sum of thicknesses of the first zone and the second zone is less than a total thickness of the anode mixture layer (e.g., around 3/4 or less of the total thickness), and the first zone and the second zone satisfy, according to energy dispersive X-ray spectroscopy, Formula 1 below:

$$[\text{Formula 1}]$$
$$1/7 \leq I_{zone2}/I_{zone1} \leq 2/3$$

where $I_{zone1}$ refers to a peak intensity corresponding to the binder included in the first zone, and $I_{zone2}$ refers to a peak intensity corresponding to the binder included in the second zone.

An anode for a secondary battery implemented based on some embodiments of the disclosed technology includes an anode current collector; and an anode mixture layer formed on at least one surface of the anode current collector and including an anode active material and a binder, wherein the anode mixture layer includes a first zone on the anode current collector and a second zone on the first zone, a sum of thicknesses of the first zone and the second zone is 3/4 or less of a total thickness of the anode mixture layer, and a content ratio of the binder included in the first zone and the second zone, respectively, ranges from 1.5:1 to 7.0:1.

In some implementations, the term "active material" can be used to indicate a material that reacts chemically to produce electrical energy.

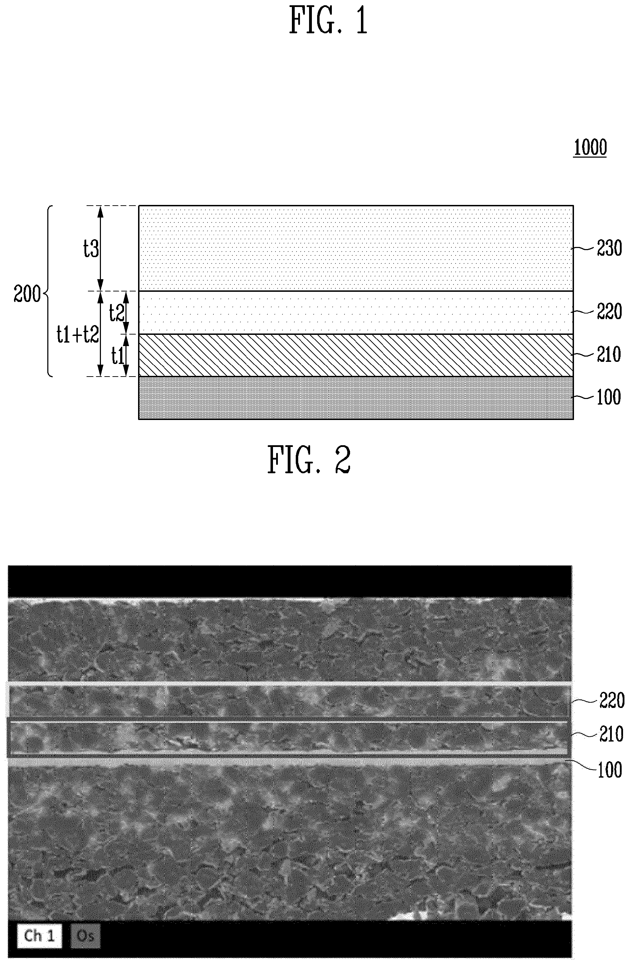

An anode 1000 implemented based on some embodiments of the disclosed technology includes an anode current collector 100 and an anode mixture layer 200 formed on at least one surface of the anode current collector 100. A structure of the anode 1000 and the anode mixture layer 200 included in the anode 1000 implemented based on an embodiment of the disclosed technology is shown in FIG. 1.

The anode current collector 100 may be designed to exhibit certain desirable properties such as electrochemical stability against oxidation and reduction, a sufficiently high electrical conductivity in the collector and at the interface with the anode mixture layer 200 and good mechanical strength to withstand the stresses and/or deformation of the anode. Various materials may be used to construct the anode current collector 100, including, for example, copper, stainless steel, aluminum, nickel, titanium, calcined carbon, surface treated copper or stainless steel with carbon, nickel, titanium, silver, or others, aluminum-cadmium alloy, or others. In addition, fine irregularities may be formed on the surface of the anode current collector 100 to enhance bonding strength of the anode active material, and may be used in various forms such as films, sheets, foils, nets, porous materials, foams, and nonwoven fabrics.

The anode mixture layer 200 is formed on at least one surface of the anode current collector 100 and may include an anode active material and a binder.

In an embodiment, the anode mixture layer 200 may be formed by coating a binder composition on the anode current collector 100, coating the anode active material composition thereon and drying. However, the preparation method of the anode mixture layer is not limited to a specific method.

Hereinafter, an anode for a secondary battery based on some embodiments of the disclosed technology will be described based on compositions that can be used in one example of a preparation process of the anode.

When preparing the anode mixture layer 200 included in the anode for a secondary battery based on some embodiments of the disclosed technology, a binder layer may be formed by coating a binder composition, and although an anode active material layer may be formed by coating the anode active material composition, it may be difficult to distinguish the binder layer from the anode active material layer after drying the anode mixture layer 200. After the anode mixture layer 200 is dried, some of the binder included in the binder composition may migrate to the anode active material layer, and some of the anode active material included in the anode active material composition may migrate to the binder layer.

In an embodiment, the anode for a secondary battery may be formed using a wet-on-wet method, for example. Specifically, an anode mixture layer including a binder layer and an anode active material layer may be formed by applying the binder composition on the anode current collector, and without drying, applying the anode active material composition and then drying. The binder layer and the anode active material layer may be formed in a wet-on-wet method by a slot-die coater, a roll-coater, a knife coater, an extrusion coater, or a gravure-coater.

The binder composition may include a first binder. The first binder may improve the adhesion between the anode current collector and the anode active material to improve the capacity retention rate of the secondary battery, and may include, for example, styrene butadiene rubber. In some implementations, the binder composition may include at least one conductive material from the group consisting of natural graphite, artificial graphite, carbon black, acetylene black, ketjen black, channel black, furnace black, lamp black, summer black, carbon fiber, metal fiber, carbon fluoride, aluminum powder, nickel powder, zinc oxide, potassium titanate, titanium oxide and polyphenylene derivatives to improve conductivity. The content of the first binder may be 10 wt% to 60 wt%, 10 wt% to 40 wt%, 10 wt% to 35 wt%, or 10 wt% to 30 wt% based on the total weight of the binder layer. When the above range is satisfied, resistance of the secondary battery does not increase, and adhesion between the anode current collector and the anode active material layer may be improved.

In an embodiment, the binder composition may optionally include a thickening agent to secure advantages in the preparation process. The thickening agent can improve the problem of cracks on the surface of the anode by enhancing the cohesive force of the binder. The thickening agent may include at least one selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum. The content of the thickening agent may be included as 0.05 wt% to 3.00 wt%, 0.10 wt% to 2.50 wt%, or 0.10 wt% to 2.00 wt% based on the total weight of the binder layer. When the above range is satisfied, process defects such as slip of the binder layer may be improved while preventing pinholes of the anode from occurring.

The binder composition may be in a form in which the above-described binder and thickening agent are included in a solvent. In an embodiment, it may be a slurry-type composition. The solvent may be, for example, water, but is not limited thereto.

By forming a binder layer through the binder composition, the interfacial adhesion between the anode current collector 100 and the anode mixture layer 200 can be improved, thereby improving the problem of electrode detachment. In addition, the anode mixture layer 200 provided with a binder layer by the binder composition is advantageous in securing an electron transfer path, thereby improving electronic conductivity, and may be advantageous in rapid charging.

In addition, the anode active material composition may include an anode active material. As an embodiment, the anode active material may include a silicon-based material, and may further include a carbon-based material as needed. The carbon-based material may include at least one selected from the group consisting of artificial graphite, natural graphite, hard carbon, soft carbon, carbon black, acetylene black, ketjen black, super P, and graphene.

The anode active material composition may include a second binder. In an embodiment, the first binder and the second binder may be the same compound, and the first binder and the second binder may be, for example, styrene butadiene rubber.

The second binder may improve adhesion between anode active materials, and thus the capacity retention rate of the secondary battery may be improved.

The content of the second binder may be 0.05 wt% to 5 wt%, 0.08 wt% to 4 wt%, 0.1 wt% to 3.0 wt%, 0.12 wt% to 2.5 wt%, 0.15 wt% to 1.5 wt% based on the total weight of the anode active material layer. When the above range is satisfied, the capacity retention rate of the secondary battery may be improved, and since the content of the anode active material may be relatively increased, the capacity of the secondary battery may also be improved.

In some implementations, the anode active material composition may further include a conductive material capable of imparting conductivity to the anode. The conductive material may include, for example, at least one selected from the group consisting of a metal-based conductive material, a carbon-based conductive material, and a conductive polymer. The metal-based conductive material may be, for example, metal powder or metal fiber such as copper, nickel, aluminum, or silver; conductive whiskers such as zinc oxide and potassium titanate; or a conductive metal oxide such as titanium oxide. The carbon-based conductive material may be, for example, graphite, carbon black, graphene, or carbon nanotubes. The conductive polymer may be, for example, a polyphenylene derivative or others.

The anode active material composition may be in a form in which the above-described anode active material, binder, and thickening agent are included in a solvent, and in an embodiment, may be a slurry type composition. The solvent may be, for example, water, but is not limited thereto.

Hereinafter, the anode for a secondary battery based on some embodiments of the disclosed technology will be described in more detail based on configurations finally present in the anode.

The anode mixture layer 200 included in the anode 1000 for a secondary battery based on some embodiments of the disclosed technology may be formed on at least one surface of the anode current collector 100.

The anode mixture layer 200 may include an anode active material.

In an embodiment, the anode active material included in the anode mixture layer 200 may include a silicon-based material. The silicon-based material may include silicon. The silicon-based material exhibits a higher capacity than the carbon-based material and can realize a high energy density per volume. The silicon-based material may include one or more selected from the group consisting of SiOx($0 \leq x < 2$), Si/C composites, and Si alloys. x corresponds to the number ratio of O to Si included in SiOx($0 \leq x < 2$). The average particle diameter (D50) of SiOx ($0 \leq x < 2$) may be 4 $\mu$m to 9 $\mu$m, or 5 $\mu$m to 7 $\mu$m. When the above range is satisfied, it is possible to prevent deterioration in the lifespan of the secondary battery due to volume expansion of the silicon-based material, and side reactions on the surface of the silicon-based material can be suppressed. The specific surface zone of SiOx ($0 \leq x < 2$) may be 4 m2/g to 9 m2/g, or 5 m2/g to 8 m2/g. When the above range is satisfied, the conductive network with the conductive material may be improved. The Si/C composite may be, by firing while carbon is bound to SiOx ($0 \leq x < 2$) particles, a form in which carbon material is coated on the surface of a SiOx ($0 \leq x < 2$) particle or a form in which carbon is dispersed in an atomic state inside a particle of SiOx ($0 \leq x < 2$), The Si-alloy may be a form in which Si is alloyed with one or more metals selected from the group consisting of Zn, Al, Mn, Ti, Fe, and Sn. The content of the anode active material may be included as 1 wt% to 20 wt%, 3 wt% to 15 wt%, or 6 wt% to 15 wt% based on the total solid weight of the anode mixture layer. When the above range is satisfied, the energy capacity retention ratio may be improved while improving the energy density of the secondary battery.

In an embodiment, the anode active material included in the anode mixture layer 200 may further include a carbon-based material. The carbon-based material may include carbon. The carbon-based material may include at least one selected from the group consisting of artificial graphite, natural graphite, hard carbon, soft carbon, carbon black, acetylene black, ketjen black, super P, and graphene

In addition, the anode mixture layer 200 may include a binder. Binder included in the anode mixture layer 200 may have good adhesion to the anode current collector, and for example, at least one selected from the group consisting of polyvinylidene fluoride, carboxymethylcellulose, styrene butadiene rubber, polyacrylic acid, polyimide, polyamideimide, polyvinyl alcohol, hydroxypropylcellulose, polyvinylchloride, carboxylated polyvinylchloride, polyvinyl fluoride, polymers including ethylene oxide, polyvinylpyrrolidone, polyurethane, polytetrafluoroethylene, polyethylene, polypropylene, acrylated styrene-butadiene rubber, and epoxy resin may be used as the binder. In an embodiment, as the binder, styrene butadiene rubber, polyacrylic acid, polyvinyl alcohol can be used. The content of the binder may be included in 0.05 wt% to 5.0 wt%, 0.1 wt% to 5.0 wt%, 0.1 wt% to 4.0 wt%, or 0.1 wt% to 3.0 wt% based on the total solid weight of the anode mixture layer. When the above range is satisfied, resistance characteristics of the secondary battery may be improved while maintaining adhesion at the interface between the anode current collector and the anode mixture layer.

In general, the binder is non-uniformly present among anode active materials in the form of small particles. When the content of the binder on the surface of the anode active material increases, gaps between the anode active materials are blocked, resulting in a problem of reducing insertion of lithium ions transferred from the cathode into the anode. This causes an increase in the resistance of the secondary battery to cause precipitation of lithium salt on the surface of the anode, leading to a problem in that the capacity retention ratio of the secondary battery is lowered. In order to prevent such a problem, if the content of the binder on the surface of the anode active material is reduced, lithium ions can be easily inserted into the anode, and the capacity retention ratio of the secondary battery can be improved. However, even if the content of the binder on the surface of the anode active material is reduced, when the content of the binder on the anode current collector is significantly increased, after the drying process, strong stress is generated between the anode active materials, resulting in reduced brittleness and increased stress, causing deformation of the anode.

As such, since the content distribution of the binder in the anode active material has a significant influence on the performance of the secondary battery, it is necessary to optimize the content distribution of the binder in the anode mixture layer 200 including the anode active material. For example, by optimizing the content distribution of the binder in the anode mixture layer 200, an effect of minimizing deformation of the anode while improving the capacity retention rate of the secondary battery can be expected.

In an embodiment, the anode mixture layer 200 may further include a conductive material capable of imparting conductivity to the anode. The conductive material may include, for example, at least one selected from the group consisting of a metal-based conductive material, a carbon-based conductive material, and a conductive polymer. The metal-based conductive material may be, for example, metal powder or metal fiber such as copper, nickel, aluminum, or silver; conductive whiskers such as zinc oxide and potassium titanate; or a conductive metal oxide such as titanium oxide. The carbon-based conductive material may be, for example, graphite, carbon black, graphene, or carbon nanotubes. The conductive polymer may be, for example, a polyphenylene derivative or others.

In an embodiment, the anode mixture layer 200 may further include carbon nanotubes as a conductive material. For example, carbon nanotubes may be included in the anode active material composition described above. Carbon nanotubes form a conductive network between silicon-based materials, thereby minimizing a problem in which a conductive path is isolated due to volume expansion of the silicon-based material due to long-term use of a secondary battery. Carbon nanotubes may include single-walled carbon nanotubes and multi-walled carbon nanotubes. Since single-walled carbon nanotubes can more effectively form a conductive network between silicon-based materials due to their high flexibility, the energy capacity retention ratio of a secondary battery can be improved.

The average diameter of the single-walled carbon nanotubes may be 0.1 nm to 8.0 nm, 1.5 nm to 5.0 nm, or 1.5 nm to 3.0 nm. The average diameter is a value obtained by measuring the diameters of 100 single-walled carbon nanotubes in the anode active material layer through SEM and then calculating the average thereof. The average length of the single-walled carbon nanotubes may be 3 $\mu$m to 20 $\mu$m, 4 $\mu$m to 20 $\mu$m, or 5 $\mu$m to 20 $\mu$m. When the above range is satisfied, the conductive network connecting the silicon-based materials may be maintained despite an excessive volume change of the silicon-based materials, and thus the energy capacity retention ratio of the secondary battery may be further improved. The average length is a value obtained by measuring the lengths of 100 single-walled carbon nanotubes in the anode active material layer through SEM and then calculating the average of them. The content of the single-walled carbon nanotubes may be included in an amount of greater than 0.01 wt% to less than 0.15 wt%, 0.02 wt% to 0.10 wt%, or 0.02 wt% to 0.05 wt% based on the total weight of the anode active material layer. When the above range is satisfied, it is possible to reduce the amount of single-walled carbon nanotubes used without lowering the energy capacity retention ratio of the secondary battery, thereby improving manufacturing economics through cost reduction.

A multi-walled carbon nanotube refers to a carbon nanotube having a plurality of single-walled carbon nanotubes. Multi-walled carbon nanotubes are more economical than single-walled carbon nanotubes, and may contribute to forming a conductive network with adjacent silicon-based materials when disposed on the surface of a silicon-based material together with single-walled carbon nanotubes. The average diameter of the multi-walled carbon nanotubes may be 5 nm to 200 nm, 5 nm to 100 nm, or 5 nm to 50 nm. When the above range is satisfied, it is easily dispersed in the anode active material composition, and a conductive network can be effectively formed between silicon-based materials. The average diameter is a value obtained by measuring the diameters of 100 multi-walled carbon nanotubes in the anode active material layer through SEM and then calculating the average thereof. The average length of the multi-walled carbon nanotubes may be 0.1 $\mu$m to 100 $\mu$m, 0.1 $\mu$m to 50 $\mu$m, or 0.1 $\mu$m to 3 $\mu$m. When the above range is satisfied, formation of a conductive network may be maximized even with a small content in the anode active material composition. The average length is a value obtained by measuring the lengths of 100 multi-walled carbon nanotubes in the anode active material layer through SEM and then calculating the average thereof.

The loading amount of the anode mixture layer 200 may be 4 mg/cm2 to 20 mg/cm2, 6 mg/cm2 to 18 mg/cm2, or 8 mg/cm2 to 16 mg/cm2. When the above range is satisfied, the capacity of the secondary battery may be increased and uneven distribution of the binder or the conductive material may be suppressed. In the present specification, the loading amount of the anode mixture layer 200 may refer to the weight of the anode active material coated on the anode current collector 100 per unit zone. The loading amount may refer to the sum of the weights of the solid content of the binder composition and the anode active material composition after the binder composition and the anode active material composition applied on the anode current collector 100 are dried, or the sum of the weights of the binder composition and the anode active material composition after the rolling process. For example, after obtaining a specimen by circularly punching at least 5 points having regular intervals in the longitudinal direction of the anode, the loading amount of the anode mixture layer may be calculated by measuring the sum of the weights of the binder composition and the anode active material composition in the specimen. The anode mixture layer may be formed by first applying the binder composition on the anode current collector, applying the anode active material composition thereon, and then drying.

The anode mixture layer 200 based on some embodiments of the disclosed technology may include a first zone 210 on the anode current collector 100 and a second zone 220 on the first zone 210.

In an embodiment, the first zone 210 may be defined as an zone in the anode mixture layer 200 contacting the anode current collector 100 on the anode current collector 100.

In an embodiment, the second zone 220 may be defined as an zone in the anode mixture layer 200 contacting the first zone 210 on the first zone 210.

In an embodiment, at least a portion of the first zone 210 may include the binder layer described above.

In an embodiment, at least a portion of the second zone 220 may include the anode active material layer described above.

In an embodiment, the anode mixture layer 200 may further include a third zone 230 on the second zone 220.

In an embodiment, the third zone 230 may be defined as an zone in the anode mixture layer 200 contacting the second zone 220 on the second zone 220.

In an embodiment, the first zone 210, the second zone 220, and the third zone 230 may be virtual zones for division within the anode mixture layer 200.

In another embodiment, the first zone 210, the second zone 220, and the third zone 230 may be physically distinguishable zones within the anode mixture layer 200.

In an embodiment, the sum of the thicknesses of the first zone 210 and the second zone 220 may be 3/4 or less of the total thickness of the anode mixture layer 200, and more specifically, 3/5 or less. In an embodiment, the sum of the thicknesses of the first zone 210 and the second zone 220 may be 2/5 to 3/5 of the total thickness of the anode mixture layer 200.

In an embodiment, the thickness of the first zone 210 may be 1/20 to 2/5 of the total thickness of the anode mixture layer 200, more specifically, may be 1/10 to 2/5, and more specifically, may be 1/8 to 3/8.

In an embodiment, the thickness of the second zone 220 may be 1/20 to 13/20 of the total thickness of the anode mixture layer 200, more specifically, may be 1/10 to 1/2, and more specifically, may be 3/20 to 3/8.

In an embodiment, the sum of the thicknesses of the first zone 210 and the second zone 220 may be equal to the thickness of the third zone 230. In an embodiment, the sum of the thicknesses of the first zone 210 and the second zone 220 may be 1/2 of the total thickness of the anode mixture layer 200. In an embodiment, the thicknesses of the first zone 210 and the second zone 220 may be the same as each other.

For example, if the thickness from the surface of the anode current collector 100 to the surface of the anode mixture layer 200 is 100 based on the thickness direction of the anode mixture layer 200, the thickness from the surface of the anode current collector 100 to the surface of the first zone 210 may be 25, and the thickness from the surface of the anode current collector to the surface of the second zone 220 may be 50. In addition, the thickness of the third zone 230 may be 50.

As described above, the anode mixture layer 200 may be formed on one surface or both surfaces of the anode current collector 100, but in the present specification, the thickness of the anode mixture layer 200 may mean the thickness of the anode mixture layer 200 formed on any one surface of the anode current collector 100.

In an embodiment, the first zone 210 and the second zone 220 may satisfy Formula 1 below according to energy dispersive X-ray spectroscopy:

[Formula 1]

$$1/7 \leq I_{zone2}/I_{zone1} \leq 2/3$$

(Here, $I_{zone1}$ refers to a peak intensity corresponding to the binder included in the first zone, and $I_{zone2}$ refers to a peak intensity corresponding to the binder included in the second zone.)

If the value of $I_{zone2}/I_{zone1}$ is less than 1/7, strong stress occurs between anode active materials after the drying process, resulting in reduced brittleness and deformation of the anode. If the value of $I_{zone2}/I_{zone1}$ exceeds 2/3, a phenomenon in which lithium ions are inserted into the anode is reduced, resulting in an increase in resistance of the secondary battery and precipitation of lithium salts on the surface of the anode, thereby reducing the capacity retention rate of the secondary battery.

In an embodiment, the peak corresponding to the binder may refer to a peak according to energy dispersive X-ray spectroscopy indicating the binder itself, some elements included in the binder, or some elements bound to the binder.

For example, the peak corresponding to the binder may refer to a peak according to energy dispersive X-ray spectroscopy indicating a metal element of a metal oxide bound to the binder.

The metal oxide bound to the binder may include, for example, at least one selected from the group consisting of osmium tetroxide ($OsO_4$) and ruthenium tetroxide ($RuO_4$).

In general, the peak intensity may refer to the height of a corresponding peak or the integrated zone of the peak, and in an embodiment, the peak intensity may refer to the integrated peak intensity obtained by integrating the corresponding peak.

In an embodiment, the peak intensity corresponding to the binder may be measured by confirming a peak corresponding to a metal element of the metal oxide bound to the binder using energy dispersive X-ray spectroscopy, after binding the binder with the metal oxide.

In an embodiment, the binder may be a butadiene-based binder, and the butadiene-based binder may include, for example, styrene butadiene rubber. For example, when a metal oxide such as osmium tetroxide ($OsO_4$) or ruthenium tetroxide ($RuO_4$) is bound with a butadiene-based binder (staining), a carbon double bond in butadiene may be substituted. Accordingly, contrast is strengthened (brightened), and the binder can be clearly distinguished from the anode active material. In other words, since the atomic number of osmium is 76 and the atomic number of ruthenium is 44, which is relatively much higher than the atomic number of silicon (atomic number: 14) and/or carbon (atomic number: 6) of graphite constituting the anode active material, when such a metal oxide is bound with a binder, the contrast due to the atomic number difference can be strengthened. Therefore, it is possible to easily distinguish between the binder and the anode active material by binding the binder with the metal oxide.

For example, the peak intensity value corresponding to the binder may be obtained by cutting the anode mixture layer 200 in the thickness direction, binding the osmium tetroxide ($OsO_4$) with the binder included in the anode mixture layer 200, and then performing energy dispersive X-ray spectroscopy.

In an embodiment, the binder content ratio of the first zone 210 and the second zone 220 may be indirectly measured through peaks corresponding to binders included in the first zone 210 and the second zone 220 using energy dispersive X-ray spectroscopy as described above.

For example, within the first zone 210 and the second zone 220, based on the peak intensity corresponding to the metal element of the metal oxide bound to the binder measured using energy dispersive X-ray spectroscopy, the binder content ratio of the first zone 210 and the second zone 220 may be indirectly calculated.

Therefore, the content ratio of the binders respectively included in the first zone 210 and the second zone 220 may be 1.5:1 to 7.0:1, specifically 1.5:1 to 5.0:1, more specifically 2.0:1 to 4.5:1, and even more specifically 2.09: 1 to 4.01:1.

When the binder content ratio of the first zone 210 and the second zone 220 is less than 1.5:1, a phenomenon in which lithium ions are inserted into the anode is reduced, resulting in an increase in resistance of the secondary battery and precipitation of lithium salts on the surface of the anode, thereby reducing the capacity retention rate of the secondary battery. When the content ratio of the binder in the first zone 210 and the second zone 220 exceeds 7.0:1, after the drying process, strong stress is generated between the anode active materials, which reduces brittleness and causes deformation of the anode.

In an embodiment, the content of the binder may be expressed in proportion to the weight of the binder included in each zone, and for example, the content ratio of the binder in each zone may be expressed as a weight ratio of the binder.

In addition, the anode mixture layer 200 may further include a silicon-based material.

In an embodiment, the first zone 210 and the second zone 220 may satisfy Formula 2 below according to energy dispersive X-ray spectroscopy.

[Formula 2]

$$1/12 \leq (I_{zone2}/I_{Si2})/(I_{zone1}/I_{Si1}) \leq 2/3$$

(Here, $I_{zone1}$ refers to the peak intensity corresponding to the binder included in the first zone, $I_{zone2}$ refers to the peak intensity corresponding to the binder included in the second zone, $I_{Si1}$ refers to a peak intensity corresponding to the silicon-based material included in the first zone, and $I_{Si2}$ refers to a peak intensity corresponding to the silicon-based material included in the second zone.)

If the value of $(I_{zone2}/I_{Si2})/(I_{zone1}/I_{Si1})$ is less than 1/12, strong stress is generated between the anode active materials after the drying process, resulting in reduced brittleness and deformation of the anode. If the value of $(I_{zone2}/I_{Si2})/(I_{zone1}/I_{Si1})$ exceeds 2/3, a phenomenon in which lithium ions are inserted into the anode is reduced, resulting in an increase in resistance of the secondary battery and precipitation of lithium salts on the surface of the anode, thereby reducing the capacity retention rate of the secondary battery.

In an embodiment, the peak corresponding to the binder may refer to a peak according to energy dispersive X-ray spectroscopy indicating the binder itself, some elements included in the binder, or some elements bound to the binder.

For example, the peak corresponding to the binder may refer to a peak according to energy dispersive X-ray spectroscopy indicating a metal element of a metal oxide bound to the binder.

The metal oxide bound to the binder may include, for example, at least one selected from the group consisting of osmium tetroxide ($OsO_4$) and ruthenium tetroxide ($RuO_4$).

In an embodiment, a peak corresponding to silicon may refer to a peak according to energy dispersive X-ray spectroscopy indicating a silicon element included in a silicon-based material.

In general, the peak intensity may refer to the height of the corresponding peak or the integrated zone of the peak, and in an embodiment, the peak intensity may refer to an integrated peak intensity obtained by integrating the corresponding peak.

In an embodiment, the ratio of the silicon content and the binder content in the first zone 210 and the second zone 220 may be, as described above, indirectly measured through the peak corresponding to the binder included in the first zone 210 measured using energy dispersive X-ray spectroscopy, the peak corresponding to the binder included in the second zone 220, the peak corresponding to the silicon-based material included in the first zone 210, and the peak corresponding to the silicon-based material included in the second zone 220.

For example, within the first zone 210 and the second zone 220, based on the peak intensities corresponding to the metal element of the metal oxide bound to the binder and the silicon element of the silicon-based material, respectively, measured using energy dispersive X-ray spectroscopy, the ratio of the silicon content and the binder content in the first zone 210 and the second zone 220 may be indirectly calculated.

More specifically, $(X_{B1}/X_{Si1}):(X_{B2}/X_{Si2})$ ratio may be calculated, and here, $X_{B1}$ may refer to the content of the binder included in the first zone 210, $X_{B2}$ may refer to the content of the binder included in the second zone 220, $X_{Si1}$ may refer to the content of silicon atoms included in the first zone 210, and $X_{Si2}$ may refer to the content of silicon atoms included in the second zone 220.

In an embodiment, the content of the binder may be expressed in proportion to the weight of the binder included in each zone, and may be expressed as, for example, the weight of the binder or the weight ratio of the binder in each zone. The silicon content may be expressed in proportion to the weight of silicon atoms included in each zone, and may be expressed as, for example, the weight of silicon atoms or the weight ratio of silicon atoms in each zone.

For example, when a binder is bound with a metal oxide, the number of metal atoms bound to the binder in each zone may be proportional to the number of binders. Accordingly, the weight of the binder included in each zone may be proportional to the number of metal atoms bound to the binder in each zone.

In addition, the weight of the silicon atoms included in each zone may be proportional to the number of silicon atoms in each zone.

The calculated ratio $(X_{B1}/X_{Si1}):(X_{B2}/X_{Si2})$ may be 1.5:1 to 12:1, more specifically, 1.8:1 to 11:1, and more specifically 2:1 to 10:1.

If $(X_{B1}/X_{Si1}):(X_{B2}/X_{Si2})$ is less than 1.5:1, a phenomenon in which lithium ions are inserted into the anode is reduced, resulting in an increase in resistance of the secondary battery and precipitation of lithium salts on the surface of the anode, thereby reducing the capacity retention rate of the secondary battery. If $(X_{B1}/X_{Si1}):(X_{B2}/X_{Si2})$ exceeds 12:1, after the drying process, strong stress is generated between the anode active materials, which reduces brittleness and causes deformation of the anode.

Secondary Battery

A secondary battery based on some embodiments of the disclosed technology includes the above-described anode, cathode, and a separator interposed between the anode and the cathode.

The secondary battery includes an anode for a secondary battery, and as the anode for a secondary battery, the anode current collector and the anode mixture layer described in relation to the anode for a secondary battery based on some embodiments of the disclosed technology may be equally used.

In addition to the anode of the disclosed technology, the secondary battery includes a cathode and a separator. The cathode may include a cathode current collector and an active material layer disposed on the cathode current collector. The active material layer may include an active material. For example, the cathode active material layer may include a cathode active material, and the cathode active material may be a material into which Li ions may be stored and extracted.

The cathode active material may be lithium metal oxide. For example, the cathode active material may be one of lithium manganese oxides, lithium nickel oxides, lithium cobalt oxides, lithium nickel manganese oxides, lithium nickel cobalt manganese oxides, lithium nickel cobalt aluminum oxides, lithium iron phosphate compounds, lithium phosphate manganese compounds, lithium phosphate cobalt compounds, and lithium phosphate vanadium compounds, but is not limited to a specific example.

The separator may be interposed between the anode and the cathode. The separator is configured to prevent an electrical short circuit between the anode and the cathode to generate a flow of ions. The separator may include a porous polymer film or a porous nonwoven fabric. Here, the porous polymer film may be composed of a single layer or multiple layers, including polyolefin-based polymers such as ethylene polymers, propylene polymers, ethylene/butene copolymers, ethylene/hexene copolymers, and ethylene/methacrylate copolymers. The porous nonwoven fabric may include glass fibers with a high melting point, polyethylene terephthalate fibers. However, it is not limited thereto, and in an embodiment, the separator may be a ceramic coated separator (CCS) including ceramic.

The anode, cathode and separator may be fabricated into an electrode assembly by a winding, lamination, folding, or zigzag stacking process. In addition, the electrode assembly may be provided with an electrolyte to prepare a secondary battery based on some embodiments of the disclosed technology. The secondary battery may be any one of a cylindrical shape using a can, a prismatic shape, a pouch shape, and a coin shape, but is not limited thereto.

The electrolyte may be a non-aqueous electrolyte. The electrolyte may include a lithium salt and an organic solvent. For example, the organic solvent may include at least any one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

Hereinafter, the anode for a secondary battery and the secondary battery based on some embodiments of the disclosed technology will be described in more detail based on Examples and Comparative Examples. However, the following Examples and Comparative Examples are only examples for explaining the disclosed technology in more detail, and the disclosed technology is not limited by the following Examples and Comparative Examples.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a secondary battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery based energy storage systems (ESSs) to store renewable energy such as solar power and wind power.

Examples

Preparation Example 1 - Binder composition preparation

A binder composition was prepared containing styrene butadiene rubber and distilled water in a ratio of 1:4 by weight.

Example 1

Anode active material composition preparation

An anode active material composition was prepared by mixing a carbon-based active material in which artificial graphite (D50: 13 $\mu$m) and natural graphite (D50: 10 $\mu$m) are mixed, silicon oxide (SiO), a graphite-based conductive material, carboxymethyl cellulose, and styrene butadiene rubber in a weight ratio of 94.5:1:3:1:0.5.

Anode preparation

After applying the prepared binder composition to the copper thin film, the anode active material composition was applied on the applied binder composition. Thereafter, the anode was prepared by drying under vacuum at 130°C for 1 hour. The binder layer was prepared by the binder composition, and the anode active material layer was prepared by the anode active material composition. The loading ratio of the binder layer and the anode active material layer was 0.1:9.5.

Cathode preparation

A cathode active material composition was prepared by mixing, as an active material, Li[Ni0.88Co0.10Mn0.02]O2, carbon black and polyvinylidene fluoride (PVdF) in a weight ratio of 96:3:1. The cathode active material composition was uniformly applied to aluminum foil and vacuum dried to prepare a cathode.

Secondary battery preparation

The anode and cathode were laminated by notching to a predetermined size, and an electrode cell was formed with a polyethylene (PE) separator interposed between the anode and the cathode, and then tab portions of the anode and the cathode were welded, respectively. The welded anode/separator/cathode assembly was placed in a pouch and sealed on three sides except for the electrolyte injection part.

After injecting the electrolyte through the electrolyte injection part and sealing the remaining side, it was impregnated for 12 hours or more. As the electrolyte, a solution obtained by dissolving 1M LiPF6 in a solvent mixed with EC/EMC/DEC was used.

Thereafter, pre-charging was performed at a current corresponding to 0.25 C for 36 minutes. Degassing was performed after 1 hour, and after aging for more than 24 hours, chemical charging/discharging was performed (charging condition CC-CV 0.2C 4.2V 0.05C CUT-OFF, discharging condition CC 0.2C 2.5V CUTOFF). Thereafter, a secondary battery was prepared by performing standard charging/discharging (charging condition CC-CV 0.33C 4.2V 0.05C CUT-OFF, discharging condition CC 0.33C 2.5V CUT-OFF).

Example 2

An anode active material composition was prepared by mixing a carbon-based material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 95:3:0.5:1:0.5, and secondary battery was manufactured by the same process as in Example 1, except that the loading ratio of the binder layer and the anode active material layer was 0.2:9.4.

Example 3

A secondary battery was manufactured by the same process as in Example 2, except that the loading ratio of the binder layer and the anode active material layer was 0.2:11.8.

Example 4

An anode active material composition was prepared by mixing a carbon-based active material in which artificial graphite (D50: 13 $\mu$m) and natural graphite (D50: 10 $\mu$m) are mixed, silicon oxide (SiO), single-walled carbon nanotubes, multi-walled carbon nanotubes, carboxymethyl cellulose, and styrene butadiene rubber in a weight ratio of 92.8:5:0.1:0.4:1.2:0.5, and a secondary battery was prepared by the same process as in Example 1, except that the loading ratio of the binder layer and the anode active material layer was 0.2:12.4.

Comparative Example 1

First anode active material composition preparation

A first anode active material composition was prepared by mixing a carbon-based active material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 93.4:3:0.4:1.2:2.

Second anode active material composition preparation

A second anode active material composition was prepared by mixing a carbon-based active material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 94.8:3:0.4:1.2:0.6.

Anode preparation

After applying the prepared first anode active material composition to the copper thin film, the second anode active material composition was applied on the first anode active material composition. Thereafter, drying was performed under vacuum at 130°C for 1 hour to prepare an anode having a first anode active material layer made of the first anode active material composition and a second anode active material layer made of the second anode active material composition. The loading ratio of the prepared first anode active material layer and the second anode active material layer was 5: 5.

Secondary battery preparation

A secondary battery was prepared by the same process as the preparation process of the cathode and the secondary battery of Example 1 except for using the above anode.

Comparative Example 2

First anode active material composition preparation

A first anode active material composition was prepared by mixing a carbon-based active material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 92.8:3:0.4:1.2:2.6.

Second anode active material composition preparation

A second anode active material composition was prepared by mixing a carbon-based active material in which is artificial graphite (D50: 13 $\mu$m) and natural graphite (D50: 10 $\mu$m) are mixed, silicon oxide (SiO), multi-walled carbon nanotubes, and carboxymethyl cellulose in a weight ratio of 95.4:3:0.4: 1.2.

Anode preparation

An anode was prepared by the same process as in Comparative Example 1, except that the first and second anode active material layers were prepared using the first and second anode active material compositions described above.

Secondary battery preparation

A secondary battery was prepared by the same process as the preparation process of the cathode and the secondary battery of Comparative Example 1, except for using the above anode.

Comparative Example 3

First anode active material composition preparation

A first anode active material composition was prepared by mixing a carbon-based active material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 93:3:0.4:1.2:2.4.

Second anode active material composition preparation

A second anode active material composition was prepared by mixing a carbon-based active material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 95.2:3:0.4:1.2:0.2.

Anode preparation

An anode was prepared by the same process as in Comparative Example 1, except that the first and second anode active material layers were prepared using the first and second anode active material compositions described above.

Secondary battery preparation

A secondary battery was prepared by the same process as the preparation process of the cathode and the secondary battery of Comparative Example 1, except for using the above anode.

Comparative Example 4

An anode and a secondary battery were prepared by the same process as in Comparative Example 3, except that the loading amount of the anode mixture layer including the first and second anode active material layers was prepared as shown in Table 1 below.

Comparative Example 5

First anode active material composition preparation

A first anode active material composition was prepared by mixing a carbon-based active material in which is artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 94.9: 1:0.5:1.2:2.4.

Second anode active material composition preparation

A second anode active material composition was prepared by mixing a carbon-based active material in which artificial graphite (D50: 13 $\mu$m) and natural graphite (D50: 10 $\mu$m) are mixed, silicon oxide (SiO), multi-walled carbon nanotubes, carboxymethyl cellulose, and styrene butadiene rubber in a weight ratio of 97.1: 1:0.5:1.2:0.2.

Anode preparation

An anode was prepared by the same process as in Comparative Example 1, except that the first and second anode active material layers were prepared using the first and second anode active material compositions described above.

Secondary battery preparation

A secondary battery was prepared by the same process as the preparation process of the cathode and the secondary battery of Comparative Example 1, except for using the above anode.

Comparative Example 6

An anode active material composition was prepared by mixing a carbon-based active material in which artificial graphite (D50: 13 $\mu$m) and natural graphite (D50: 10 $\mu$m) are mixed, SiO, a graphite-based conductive material, and carboxymethyl cellulose in a weight ratio of 95:1:3:1.

A secondary battery was prepared by the same process as in Example 1, except that the loading ratio of the binder layer prepared by the binder composition and the anode active material layer prepared by the anode active material composition of Preparation Example 1 was 0.1:9.5.

The osmium (Os) element content ratio in the first and second zones and the loading amount of the anode mixture layer of the anode prepared in Examples 1 to 4 and Comparative Examples 1 to 6 are shown in Table 1 below.

Experimental Examples

Experimental Example 1 - Measurement of binder content distribution in anode

In order to detect the binder in the anode, the anodes prepared in Examples 1 to 4 and Comparative Examples 1 to 6 were stained with osmium tetroxide (OsO4). In other words, osmium tetroxide (OsO4) was bonded to the binder in the anode. Thereafter, a cross section of the anode mixture layer was cut and analysis was performed by energy dispersive X-ray spectroscopy. As a result of analysis by energy dispersive X-ray spectroscopy, the distribution of osmium (Os) elements in the cross section of the anode mixture layer indicates the distribution of styrene butadiene rubber as a binder. The cross section in the thickness direction of the anode mixture layer stained with osmium tetroxide (OsO4) was divided into first zone, second zone, and third zone, respectively, from the zone relatively close to the anode current collector.

The zone in contact with the anode current collector on the anode current collector was defined as a first zone, the zone in contact with the first zone on the first zone was defined as a second zone, and the zone in contact with the second zone on the second zone was defined as a third zone.

Referring to FIG. 1, each zone is set so that the sum (t1+t2) of the thickness t1 of the first zone and the thickness t2 of the second zone is equal to the thickness t3 of the third zone, and each zone is set so that the thickness t1 of the first zone and the thickness t2 of the second zone are the same.

Here, the peak intensity of the osmium (Os) element present in the first zone and the second zone was measured by energy dispersive X-ray spectroscopy, and based on this, the content ratio of the osmium (Os) element present in the first zone and the second zone was calculated, and the results are shown in FIG. 2 and Table 1 below.

In addition, by using the characteristics of silicon which exhibits a color different from that of the osmium element, when analyzed by energy dispersive X-ray spectroscopy, the ratio of the intensity of the peak representing the osmium (Os) element/the intensity of the peak representing the silicon (Si) atom in the first zone and the second zone was measured, and based on this, the ratio of the binder content/silicon content value present in the first zone and the second zone was calculated, and the results are shown in Table 1 below.

Experimental Example 2 - Measurement of capacity retention ratio

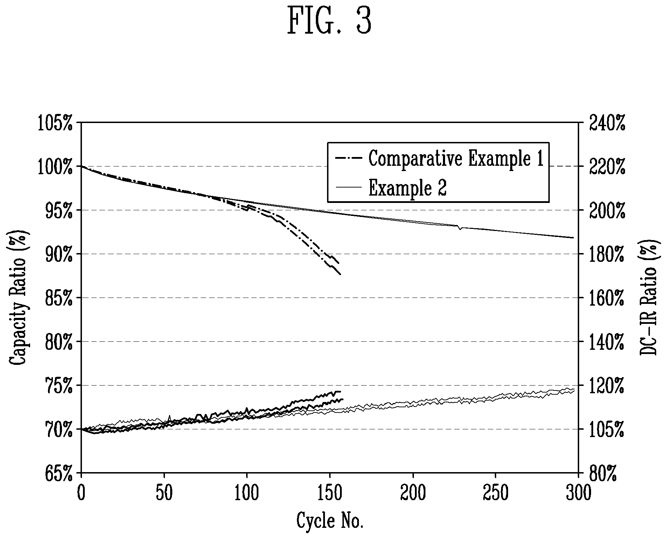

The discharge capacity was measured while repeatedly charging (CC/CV 2.0C 4.2V 0.1C CUT-OFF) and discharging (CC 0.33C 2.5V CUT-OFF) for the anodes prepared in Examples 1 to 4 and Comparative Examples 1 to 6, and among them, the percentage of the value obtained by dividing the discharge capacity at 150 cycles by the discharge capacity at 1 cycle was calculated as the capacity retention ratio, and the results are shown in Table 1 and FIG. 3 below.

Experimental Example 3 - Measurement of DC resistance increase ratio

Charging (CC/CV 2.0C 4.2V 0.1C CUT-OFF) and discharging (CC 0.33C 2.5V CUT-OFF) were repeatedly performed for the anodes prepared in Example 2 and Comparative Example 1, and among them, the percentage of the value obtained by dividing the DC resistance at 150 cycles by the DC resistance at 1 cycle was expressed as a DC resistance increase ratio (DC-IR ratio), and the results are shown in FIG. 3.

Experimental Example 4 - Observation of whether or not anode cracking occurred

Notching was performed on each anode of Examples 1 to 4 and Comparative Examples 1 to 6 using a press device, and in this process, it was observed with the naked eye and a microscope whether cracks occurred in each anode.
The results on whether or not anode cracking occurred are shown in Table 1 below.

TABLE 1

| | | Example | | | | Comparative example | | | | | |
|---|---|---|---|---|---|---|---|---|---|---|---|
| | | 1 | 2 | 3 | 4 | 1 | 2 | 3 | 4 | 5 | 6 |
| Anode | $I_{zone2}/I_{zone1}$[1] | 0.25 | 0.37 | 0.49 | 0.47 | 1.23 | 1.09 | 0.96 | 0.97 | 1.27 | 0.14 |
| | First zone binder content: second zone binder content[2] | 4.01:1 | 2.73:1 | 2.05:1 | 2.13:1 | 0.81:1 | 0.92:1 | 1.04:1 | 1.03:1 | 0.79:1 | 7.22:1 |
| | $(I_{zone2}/I_{Si2})/(I_{zone1}/I_{Si1})$[3] | 0.13 | 0.11 | 0.48 | 0.31 | 1.14 | 1.41 | 0.92 | 0.98 | 1.47 | 0.08 |
| | First zone binder content/ silicon content: second zone binder content/ silicon content[4] | 7.48:1 | 9.48:1 | 2.07:1 | 3.23:1 | 0.88:1 | 0.71:1 | 1.09:1 | 1.02:1 | 0.68:1 | 12.83:1 |
| | Anode mixture layer Loading amount $(mg/cm^2)$ | 9.6 | 9.6 | 12.0 | 12.6 | 9.6 | 9.6 | 9.6 | 11.4 | 13.0 | 9.6 |
| Capacity retention ratio (%) | | 95.3 | 95.0 | 93.9 | 92.2 | 86.6 | 88.9 | 87.8 | 85.4 | 83.5 | 95.1 |
| Whether or not cracking is found | | X | X | X | X | X | X | X | X | X | O |
| 1) After combining the binder with osmium tetroxide ($OsO_4$), the ratio of the first zone and the second zone is measured based on the intensity of the peak representing the osmium atom<br>2) The binder content ratio of the first zone and the second zone is calculated based on the measured value of $I_{zone2}/I_{zone1}$<br>3) After combining the binder with osmium tetroxide ($OsO_4$), the ratio of the first zone and the second zone is measured based on the intensity of the peak representing the silicon atom and the intensity of the peak representing the osmium atom | | | | | | | | | | | |

(continued)

| | Example | | | | Comparative example | | | | | |
|---|---|---|---|---|---|---|---|---|---|---|
| | 1 | 2 | 3 | 4 | 1 | 2 | 3 | 4 | 5 | 6 |
| 4) The binder content/silicon content ratio of the first zone and the second zone is calculated based on the measured value of $(I_{zone2}/I_{Si2})/(I_{zone1}/I_{Si1})$ | | | | | | | | | | |

According to Table 1 above, in Examples 1 to 4, the value of $I_{zone2}/I_{zone1}$ satisfies 1/7 to 2/3, the content ratio of styrene butadiene rubber which is a binder satisfies 1.5:1 to 7.0:1 in the first zone and the second zone, the value of $(I_{zone2}/I_{Si2})/(I_{zone1}/I_{Si1})$ satisfies 1/12 to 2/3, and the ratio of the binder content to the silicon content of the first zone and the second zone satisfies 1.5:1 to 12:1. It was confirmed that the capacity retention ratio of the secondary battery was excellent in Examples 1 to 4 compared to Comparative Examples 1 to 6, and no cracking occurred in the anode.

Specifically, the active material type, binder type, and loading amount of the anode mixture layer used in Example 1 and Comparative Example 2 are the same, but Comparative Example 2 differs from Example 1 in that the value of $I_{zone2}/I_{zone1}$ and the value of $(I_{zone2}/I_{Si2})/(I_{zone1}/I_{Si1})$ exceed 2/3, the content ratio of styrene butadiene rubber is less than 1.5:1 in the first zone and the second zone, and the ratio of the binder content to the silicon content in the first zone and the second zone is less than 1.5:1.

In other words, in Comparative Example 2, compared to Example 1, the content of styrene butadiene rubber in the zone close to the anode current collector is relatively low and is uniformly distributed in the anode mixture layer, so it can be confirmed that the resistance in the anode mixture layer is increased, and thus the capacity retention ratio of the secondary battery is lowered. On the other hand, in the case of Example 1, as shown in FIG. 2, the content of styrene butadiene rubber in the zone close to the anode current collector is relatively high, and accordingly, it can be confirmed that an excellent capacity retention ratio can be obtained by reducing the resistance in the anode mixture layer.

In addition, the active material type, binder type, and loading amount of the anode mixture layer used in Example 1 and Comparative Example 6 are the same, but Comparative Example 6 differs from Example 1 in that the value of $I_{zone2}/I_{zone1}$ is less than 1/7, the value of $(I_{zone2}/I_{Si2})/(I_{zone1}/I_{Si1})$ is less than 1/12, the content ratio of styrene butadiene rubber exceeds 7.0:1 in the first zone and the second zone, and the ratio of the binder content to the silicon content in the first zone and the second zone exceeds 12:1. Due to this difference, Comparative Example 6 showed the same capacity retention ratio of the secondary battery as Example 1, but it was confirmed that the anode was cracked due to poor brittleness of the anode.

In addition, life characteristics of the electrode of Example 2 and the electrode of Comparative Example 1, in which the electrode composition and the loading amount of the electrode mixture layer were similar to each other, were compared. As can be seen in Table 1 and FIG. 3, the electrode of Example 2 has a capacity retention ratio of 95.0% after 150 charge/discharge cycles, and can maintain its life even after 300 charge/discharge cycles. On the other hand, it can be confirmed that the electrode of Comparative Example 1 has a capacity retention ratio of only 86.6% after 150 charge/discharge cycles, and cannot maintain performance any longer when charge/discharge cycles exceed 150 cycles.

In addition, it can be seen that the electrode of Example 2 has a DC resistance increase ratio of 10% or less after 150 charge/discharge cycles, but the electrode of Comparative Example 1 has a DC resistance increase ratio of 20%.

While the disclosed technology has been shown and described with reference to certain exemplary embodiments thereof, it will be understood by those skilled in the art that various changes in form and details may be made therein without departing from the scope of the disclosed technology as defined by the appended claims. Therefore, the scope of the disclosed technology should not be limited to the above-described exemplary embodiments but should be determined by the appended claims.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the disclosed technology, and the disclosed technology is not limited thereto. That is, it should be apparent to those skilled in the art that various modifications can be made on the basis of the technological scope of the disclosed technology.

Meanwhile, the exemplary embodiments of the disclosed technology have been described in the drawings and specification. Although specific terminologies are used here, those are only to explain the embodiments of the disclosed technology. Therefore, the disclosed technology is not restricted to the above-described embodiments and many variations are possible within the scope of the disclosed technology. It should be apparent to those skilled in the art that various modifications can be made on the basis of the technological scope of the disclosed technology in addition to the embodiments disclosed herein.

**Claims**

1. An anode for a secondary battery, the anode comprising:

an anode current collector; and
an anode mixture layer formed on at least one surface of the anode current collector and comprising an anode active material and a binder,
wherein the anode mixture layer comprises a first zone on the anode current collector and a second zone on the first zone,
a sum of thicknesses of the first zone and the second zone is 3/4 or less of a total thickness of the anode mixture layer, and
the first zone and the second zone satisfy, according to energy dispersive X-ray spectroscopy, Formula 1 below:

[Formula 1]

$$1/7 \leq I_{zone2}/I_{zone1} \leq 2/3$$

wherein $I_{zone1}$ refers to a peak intensity corresponding to the binder included in the first zone, and $I_{zone2}$ refers to a peak intensity corresponding to the binder included in the second zone.

2. The anode of claim 1, wherein the binder includes a butadiene-based binder, preferably styrene butadiene rubber.

3. The anode of any of claims 1 or 2, wherein the anode active material comprises a silicon-based material.

4. The anode of claim 3, wherein the first zone and the second zone satisfy, according to energy dispersive X-ray spectroscopy, Formula 2 below:

[Formula 2]

$$1/12 \leq (I_{zone2}/I_{Si2})/(I_{zone1}/I_{Si1}) \leq 2/3$$

wherein $I_{zone1}$ refers to the peak intensity corresponding to the binder included in the first zone, $I_{zone2}$ refers to the peak intensity corresponding to the binder included in the second zone, $I_{Si1}$ refers to a peak intensity corresponding to the silicon-based material included in the first zone, and $I_{Si2}$ refers to a peak intensity corresponding to the silicon-based material included in the second zone.

5. An anode for a secondary battery, the anode comprising:

an anode current collector; and
an anode mixture layer formed on at least one surface of the anode current collector and comprising an anode active material and a binder,
wherein the anode mixture layer comprises a first zone on the anode current collector and a second zone on the first zone,
a sum of thicknesses of the first zone and the second zone is 3/4 or less of a total thickness of the anode mixture layer, and
a content ratio of the binder included in the first zone and the second zone, respectively, ranges from 1.5:1 to 7.0:1.

6. The anode of claim 5, wherein the thickness of the first zone ranges from 1/20 to 2/5 of the total thickness of the anode mixture layer,

the thickness of the second zone ranges from 1/20 to 13/20 of the total thickness of the anode mixture layer, and
the sum of the thicknesses of the first zone and the second zone ranges from 2/5 to 3/5 of the total thickness of the anode mixture layer.

7. The anode of any of claims 5 or 6, wherein the anode mixture layer further comprises a third zone on the second zone,

the sum of the thicknesses of the first zone and the second zone is equal to a thickness of the third zone, and the thickness of the first zone is identical to the thickness of the second zone.

8. The anode of any of claims 5 to 7, wherein the binder comprises styrene butadiene rubber.

9. The anode of any of claims 5 to 8, wherein the binder is included in an amount of 0.05 wt% to 5.0 wt% based on a total solid weight of the anode mixture layer.

10. The anode of any of claims 5 to 9, wherein the anode active material comprises a silicon-based material.

11. The anode of claim 10, wherein $(X_{B1}/X_{Si1}):(X_{B2}/X_{Si2})$ satisfies 1.5:1 to 12:1,
   wherein $X_{B1}$ refers to a content of the binder included in the first zone, $X_{B2}$ refers to a content of the binder included in the second zone, $X_{Si1}$ refers to a silicon content included in the first zone, and $X_{Si2}$ refers to a silicon content included in the second zone.

12. The anode of any of claims 5 to 11, wherein the anode active material is included in an amount of 1 wt% to 20 wt% based on a total solid weight of the anode mixture layer.

13. The anode of any of claims 10 to 12, wherein the anode mixture layer further comprises a carbon-based material.

14. The anode of any of claims 5 to 13, wherein a loading amount of the anode mixture layer ranges from 4 mg/cm$^2$ to 20 mg/cm$^2$.

15. A secondary battery comprising:

   an anode including:

   an anode current collector; and
   an anode mixture layer formed on at least one surface of the anode current collector and comprising an anode active material and a binder,
   wherein the anode mixture layer comprises a first zone on the anode current collector and a second zone on the first zone,
   a sum of thicknesses of the first zone and the second zone is 3/4 or less of a total thickness of the anode mixture layer, and
   the first zone and the second zone satisfy, according to energy dispersive X-ray spectroscopy, Formula 1 below:

   [Formula 1]

   $$1/7 \leq I_{zone2}/I_{zone1} \leq 2/3$$

   wherein $I_{zone1}$ refers to a peak intensity corresponding to the binder included in the first zone, and $I_{zone2}$ refers to a peak intensity corresponding to the binder included in the second zone;

   a cathode; and
   a separator interposed between the anode and the cathode.

# FIG. 1

# FIG. 2

# FIG. 3